# FASCICULE DE BREVET EUROPEEN

(11) **EP 4 381 418 B1**
(45) Date de publication et mention de la délivrance du brevet: **02.12.2026**
(21) Numéro de dépôt: 22758578.3
(22) Date de dépôt: 04.08.2022
(51) Int. Cl.: G06K 19/077, H01Q 1/38, H01Q 9/40

(54) **IDENTIFIANT RFID ET PROCÉDÉ DE FABRICATION DE CET IDENTIFIANT**
RFID-IDENTIFIZIERER UND VERFAHREN ZUR HERSTELLUNG DES IDENTIFIKATORS
RFID IDENTIFIER AND METHOD FOR PRODUCING SAID IDENTIFIER

(30) Priorité: 06.08.2021 FR 2108553
(43) Date de publication de la demande: 12.06.2024
(73) Titulaire: Axem Technology, 94000 Creteil (FR)
(72) Inventeur: CARLE, Arnaud, 94100 Saint-Maur-Des-Fosses (FR)
(74) Mandataire: Tranvouez, Edern Morgan
(86) Numéro de dépôt international: PCT/FR2022/051558
(87) Numéro de publication internationale: WO 2023/012438

(56) Documents cités:
- EP-A1- 2 164 131
- EP-A1- 2 182 578
- WO-A2-2009/141735
- US-A1- 2010 103 057
- US-A1- 2017 249 544
- LOPEZ-SORIANO SERGIO ET AL: "A Passive Wireless Sensor Network for Temperature Mapping Inside a Shielded Coaxial Enclosure", IEEE JOURNAL OF RADIO FREQUENCY IDENTIFICATION, IEEE, vol. 2, no. 3, 1 September 2018 (2018-09-01), pages 144 - 151, XP011691044, DOI: 10.1109/JRFID.2018.2860049

## Description

La présente demande de brevet se rapporte au domaine de la fabrication des identifiants RFID, expression générique couvrant les « étiquettes RFID » et les « tags RFID ».

« RFID » est un acronyme anglais signifiant « Radio Frequency Identification ».

Un identifiant RFID comprend classiquement un substrat - formé souvent d'une pluralité de couches de matériaux polymères, supportant une puce électronique et une antenne.

Un tel identifiant RFID peut ainsi recevoir et répondre à des requêtes radio émises par un émetteur / récepteur extérieur, sans contact.

Une « étiquette RFID » est obtenue par un procédé continu d'appariement de puces avec des antennes disposées sur un rouleau de substrat souple : le produit fini présente une certaine flexibilité.

Un « tag RFID » est obtenu par un assemblage paire par paire de puces avec des antennes, situées chacune sur un substrat rigide : le produit fini est beaucoup plus rigide qu'une étiquette RFID.

Un enjeu stratégique dans le domaine de l'utilisation des identifiants RFID concerne les propriétés directionnelles de ces identifiants.

Ces identifiants ont un effet un comportement anisotrope vis-à-vis des ondes électromagnétiques qui les sollicitent : selon leur orientation par rapport à ces ondes, ils présentent un gain variable.

C'est le cas pour les étiquettes RFID, dont les antennes sont planes, et qui présentent un gain nul dans certaines directions.

C'est le cas également pour les tags RFID, et en particulier pour les tags destinés à être fixés sur des supports métalliques, dont le gain varie considérablement en fonction de la direction des ondes.

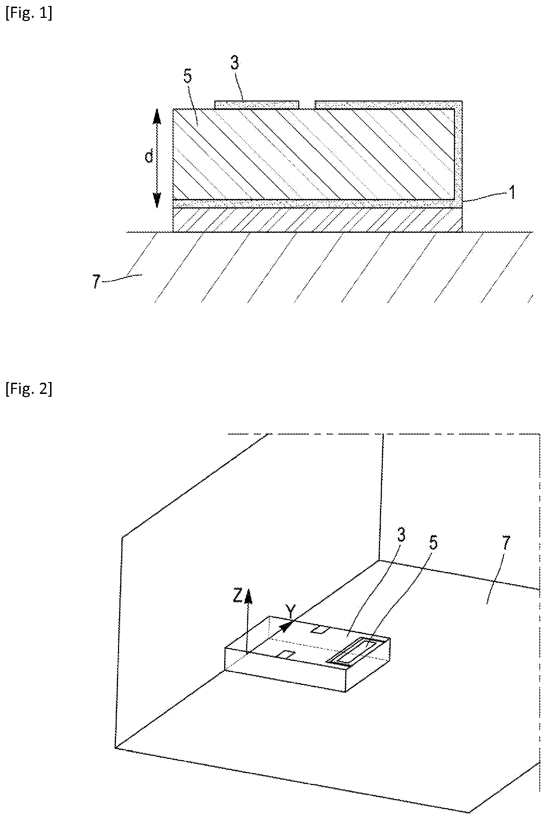

Dans le cas particulier de ces tags RFID, dont un exemplaire est représenté sur la figure 1 ci-annexée, on a de plus été amené à prévoir un plan de masse métallique 1 connecté à l'antenne 3, séparé de celle-ci par un substrat non conducteur 5 d'épaisseur d parfaitement connue, de manière à minimiser l'influence du support métallique 7 sur lequel le tag est destiné à être fixé.

Ce support métallique 7, qui peut être par exemple l'enveloppe métallique d'un objet que l'on souhaite marquer au moyen du tag RFID, est en effet susceptible d'avoir une forte influence sur le gain de ce tag RFID : selon la distance qui sépare l'antenne 3 de ce support métallique 7, l'accord en fréquence de cette antenne, et donc le gain du tag RFID, sont susceptibles de varier considérablement.

Le recours au plan de masse métallique 1 dont la distance à l'antenne 3 est parfaitement calibrée, permet de minimiser cette variabilité.

L'inconvénient toutefois de cet agencement particulier est qu'il convient de placer le tag RFID selon une orientation particulière par rapport au support métallique 7, à savoir avec le plan de masse métallique 1 en vis-à-vis de ce support.

Un autre inconvénient est qu'un tel tag RFID voit son gain chuter considérablement lorsqu'il se trouve dans certaines configurations particulières par rapport au support métallique 7, comme par exemple lorsqu'il est disposé dans un coin d'un tel support, comme représenté à la figure 2.

Les documents WO 2009/141735 A2, EP 2164131 A1, l'article de S. Lopez-Soriano publié dans IEEE Journal of radio frequency identification, volume 2, numéro 3 pages 144 à 151 en 2018, US 2010/103057 A1 et US 2017/249544 divulguent également des tags RFID pertinents en ce qui concerne la présente invention et en quoi celle-ci est brevetable.

Comme on l'aura compris la lumière de ce qui précède, il existe donc un vrai problème d'orientation de l'identifiant RFID par rapport aux ondes incidentes, tant lors de l'utilisation de cette identifiant, que lors de son installation sur l'objet devant être identifié.

La présente invention a ainsi notamment pour but de fournir un identifiant RFID qui ne soit plus tributaire de ces questions d'orientation, c'est-à-dire qui offre des performances de gain sensiblement identiques quelle que soit son orientation par rapport aux ondes incidentes et par rapport à l'objet sur lequel il est destiné à être fixé.

On atteint notamment ce but à l'aide d'un procédé de fabrication d'un identifiant RFID selon la revendication 1.

Avec un tel procédé, il est aisé de fabriquer un identifiant RFID avec son antenne qui s'étend selon l'ensemble des directions de l'espace, notamment les directions définies par les deux faces et les directions définies par les chemins conducteurs, ceci par des étapes simples à réaliser. On notera, de plus, qu'un tel procédé est parfaitement compatible avec une fabrication collective permettant de fabriquer en une seule fois une pluralité d'identifiants RFID.

On peut également atteindre le but de l'invention avec un identifiant RFID selon la revendication 8.

On notera que par voisinage d'une face, il est entendu que l'antenne s'étend à une distance de ladite face d'une distance inférieure à 10%, voire 5% ou encore à 2% de la dimension la plus petite du parallélépipède (généralement la distance entre les deux faces principales, ou autrement dit l'épaisseur du parallélépipède).

On notera également, que lorsqu'il est mentionné six faces, celles-ci comprennent les deux faces principales, c'est-à-dire les deux faces du substrat, et les quatre côtés (c'est-à-dire les faces correspondant aux lignes de découpe).

Grâce à ces caractéristiques, l'antenne de l'identifiant RFID peut recevoir les ondes d'un émetteur de manière équivalente sur n'importe laquelle des six faces du substrat, et engendrer un courant induit dans la partie de l'antenne située sur la face opposée du substrat.

Suivant des caractéristiques optionnelles du procédé selon l'invention :
- lors de l'étape de découpe, une ou plusieurs des lignes peuvent intercepter un ou plusieurs trous, voire la totalité des trous, le parallélépipède comportant en outre quatre côtés reliant les deux faces, le ou chaque trou intercepté par une ligne correspondant à une portion de cylindre interceptant le ou les côtés correspondants dudit parallélépipède, ladite portion de cylindre ou chacune desdites portions formant un chemin conducteur de l'antenne ;
- un ou plusieurs trous, peuvent ne pas être interceptés par les lignes,
   entre l'étape de retrait partiel de la couche métallique respective et l'étape de découpe de la plaque substrat, il est prévu une étape d'agencement de plaques de substrat supplémentaires sur chacune des faces de la plaque de substrat ;
- après l'étape de retrait partiel de la couche métallique respective, il peut être prévu une étape de superposition de plusieurs couches de plaques de substrat obtenues par les étapes successives de perçage et de métallisation afin de permettre la fourniture d'un parallélépipède résultant de la superposition d'au moins deux couches de substrat ;
- lors de l'étape de découpe de la plaque substrat selon des lignes interceptant chacune des trous au niveau d'une arrête, chaque chemin conducteur correspondant auxdits trous peut correspondre à un quart du cylindre défini par ledit trou ;
- il peut être fabriqué une pluralité d'identifiants RFID et :
   - Lors de l'étape de perçage de la plaque substrat d'une pluralité de trous, les trous de la pluralité de trous sont disposés selon plusieurs motifs prédéfinis,
   - Lors de l'étape de retrait partiel de la couche métallique respective de chacune des deux faces de la plaque substrat, ce retrait est réalisé de manière à définir les motifs donnés sous la forme de motifs métallisés, chaque motif métallisé reliant entre eux les trous disposés selon ledit motif,
   - Lors de l'étape de découpe de la plaque substrat selon des lignes, les lignes sont choisies de manière à former plusieurs parallélépipèdes formant chacun une antenne comprenant un motif métallisé respectif et les chemins conducteurs qui y sont associés ;
- lors de l'étape de perçage de la plaque substrat au moins deux motifs prédéfinis peuvent définir au moins un trou commun,
- lors de l'étape de découpe de la plaque substrat, au moins une ligne intercepte le ou chaque trou commun, de telle manière que les deux parallélépipèdes séparés par la découpe le long de ladite ligne comportent chacun un chemin conducteur formé par une portion de cylindre défini par le ou lesdits trous.

L'invention concerne en outre un identifiant RFID comprenant un substrat diélectrique, une antenne et une puce électronique reliée à cette antenne, dans lequel le substrat participe à la formation d'un parallélépipède comprenant deux faces et dans lequel l'antenne comprend :
- un motif métallisé réalisé sur les deux faces, chacune desdites faces présentant une partie du motif métallisé,
- des chemins conducteurs reliant entre eux les parties de motif métallisé de manière à former avec le motif métallisé l'antenne.

Suivant des caractéristiques optionnelles de l'identifiant RFID selon l'invention :
- le parallélépipède peut comporter en outre quatre côtés reliant les deux faces, et dans lequel au moins un chemin conducteur se présente sous la forme d'une portion de cylindre interceptant au moins un côté ;
- il peut être prévu une portion respective de plaque substrat supplémentaire agencée sur les deux faces du substrat ;
- l'identifiant RFID peut comprendre en outre au moins un deuxième substrat présentant deux faces et quatre arrêtes reliant lesdites deux faces et un deuxième motif métallisé étant réalisé sur les deux faces dudit deuxième substrat, chacune desdites faces présentant une partie respective du deuxième motif métallisé,
sur chacune des quatre arrêtes dudit deuxième substrat, des deuxièmes chemins conducteurs correspondent chacun à une portion de cylindre et relient entre eux les parties de deuxième motif métallisé, et le substrat et le deuxième substrat formant chacun une couche de plaque de substrat et étant superposés l'un à l'autre pour former le parallélépipède.

Cet agencement particulier permet donc de s'affranchir des contraintes d'orientation de l'identifiant RFID par rapport à la direction des ondes incidentes, et par rapport à l'objet sur lequel il est destiné à être fixé.

Suivant d'autres caractéristiques optionnelles de cet identifiant RFID :
- ladite antenne s'étend à la surface de chacune des six faces dudit substrat ;
- ladite antenne s'étend à l'intérieur dudit substrat, en retrait par rapport à au moins certaines des six faces dudit substrat : cet agencement particulier permet de protéger l'antenne vis-à-vis des agressions extérieures, et notamment de la corrosion.

Optionnellement, la présente invention se rapporte également à un procédé de fabrication d'un identifiant RFID conforme à ce qui précède, dans lequel :
- on perce une plaque de substrat selon un motif prédéterminé,
- on métallise cette plaque de substrat, partiellement à l'intérieur dudit motif sur au moins l'une de ses faces, et totalement à l'intérieur d'au moins certains des trous ainsi formés,
- on découpe cette plaque de substrat selon des lignes correspondant audit motif.

Grâce à ses caractéristiques, on obtient des parallélépipèdes de substrat munis d'éléments conducteurs sur ou à proximité de chacune de ses faces, couvrant partiellement celles-ci, et interconnectés entre eux : cette interconnexion est assurée par les trous dont les surfaces intérieures sont totalement métallisées, et qui réalisent le lien électrique entre les parties métallisées réalisées sur chacune des faces du substrat.

Suivant des caractéristiques optionnelles de ce procédé :
- on découpe ladite plaque de substrat selon des lignes qui coupent les trous formés dans celle-ci : on obtient de la sorte des parties métallisées formées sur les arêtes et sur les surfaces extérieures du parallélépipède de substrat ;
- on découpe ladite plaque de substrat selon des lignes qui ne coupent pas les trous formés dans celle-ci : on obtient de la sorte des parties métallisées dont certaines sont en retrait par rapport aux surfaces extérieures du parallélépipède de substrat ;
- on recouvre les faces métallisées dudit substrat d'autres plaques de substrat, avant de procéder à la découpe : on peut de la sorte obtenir un identifiant RFID dont l'antenne est en retrait de chacune des six faces du substrat, permettant une protection optimale de celle-ci ;
- on superpose une pluralité de plaques de substrat obtenues chacune selon ce qui précède, en décalant les motifs, de manière à obtenir différentes formes d'antenne : ce procédé permet d'obtenir une grande variété de formes d'antennes, malgré les limitations géométriques inhérentes à celui-ci ;
- on métallise les deux faces de ladite plaque de substrat, et la totalité desdits trous ;
- on métallise une seule des faces de ladite plaque de substrat et/ou seulement certains desdits trous, de manière à obtenir un parallélépipède formant antenne métallisée sur seulement cinq de ses six faces.

D'autres caractéristiques et avantages de l'invention ressortiront à la lecture de la description qui suit, en référence aux figures annexées, qui illustrent :
[Fig. 1] : une vue en coupe d'un tag RFID de la technique antérieure fixé sur un support métallique, tel que discuté dans le préambule ci-dessus ;
[Fig. 2] : une vue en perspective d'un tag RFID de la technique antérieure fixée dans un coin d'un support métallique, tel que discuté dans le préambule ci-dessus ;
[Fig. 3] : les différentes étapes d'une première variante du procédé selon l'invention ;
[Fig. 4] : une vue en perspective d'un tag RFID obtenu avec ce procédé ;
[Fig. 5] : une vue en perspective d'un autre tag RFID obtenu avec ce procédé ;
[Fig. 6] : une vue de côté du tag RFID de la figure 4 lorsqu'il est frappé par une onde incidente ;
[Fig. 7] : un schéma de découpe d'une plaque de substrat métallisé, selon une deuxième variante du procédé non comprise dans l'invention l'invention ; et
[Fig. 8] : une vue en perspective d'un tag RFID obtenu avec cette deuxième variante du procédé non comprise dans l'invention.

Pour plus de clarté, les éléments identiques ou similaires sont repérés par des signes de référence identiques ou similaires sur l'ensemble des figures.

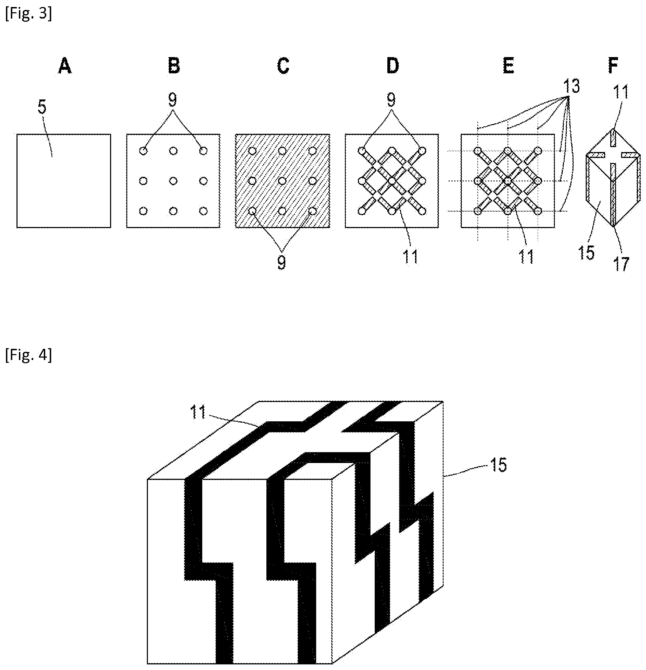

On se reporte à présent à la figure 3, sur laquelle on peut voir les différentes étapes A à F d'une première variante du procédé selon l'invention.

A l'étape A, on part d'une plaque de substrat 5 formée dans un matériau diélectrique, que l'on perce à l'étape B d'une pluralité de trous 9 disposés selon un motif prédéfini tel qu'un quadrillage.

A l'étape C, on métallise les deux faces du substrat 5, ainsi que l'intérieur des trous 9 : un chemin conducteur passant dans les trous 9 est ainsi établi entre chacune des faces du substrat 5.

A l'étape D, on retire partiellement la couche métallique de chacune des faces du substrat 5, par exemple par gravure chimique (« etching ») de manière à obtenir un motif métallisé prédéfini : en l'espèce, comme cela est visible sur la figure 3, ce motif métallisé se présente sous la forme d'un quadrillage métallisé 11, reliant les trous 9 entre eux.

A l'étape E, on vient découper la plaque de substrat 5 selon des lignes 13 interceptant chacune les trous 9, définissant elles aussi un quadrillage.

On obtient ainsi à l'étape F une pluralité de parallélépipèdes 15 formant chacun une antenne, chaque parallélépipède 15 comportant sur deux de ses faces une partie du motif métallisé 11 réalisé sur chacune des faces de la plaque de substrat 5, et sur ses quatre arêtes des chemins conducteurs 17 correspondant chacun à un quart du cylindre défini par chaque trou 9.

Ces chemins conducteurs 17 relient entre eux chacun des motifs métallisés 11.

Comme on peut donc le comprendre, on obtient un parallélépipède dont toutes les faces sont partiellement métallisées.

Si l'on souhaite obtenir une plus grande variété de motifs d'antenne, on peut superposer plusieurs couches de substrats ayant subi chacune des opérations de perçage et de métallisation conformes à ce qui précède.

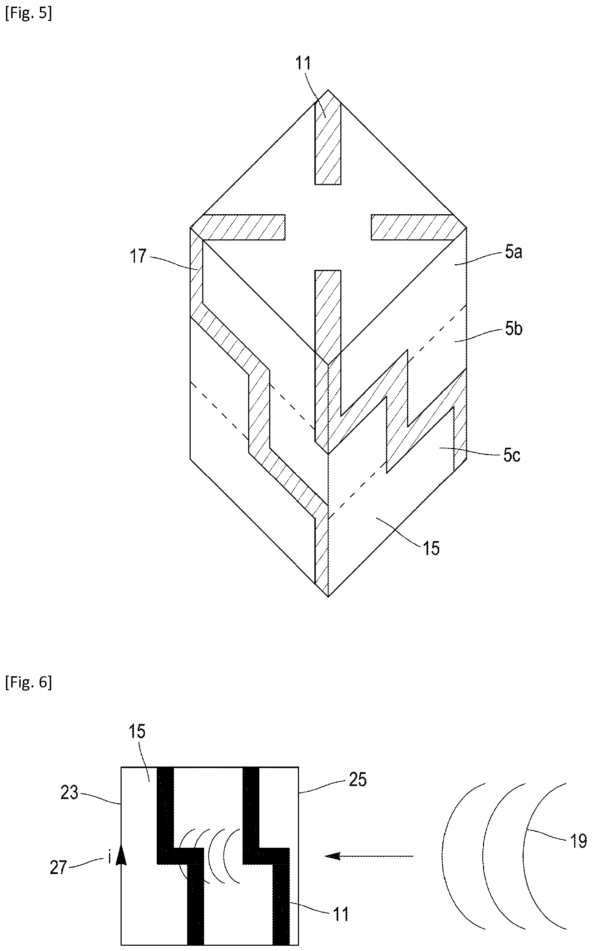

On a représenté par exemple à la figure 4 un parallélépipède de substrat métallisé 15 résultant de la superposition de deux couches de substrat, et à la figure 5 un parallélépipède de substrat métallisé résultant de la superposition de trois couches de substrat 5a, 5b, 5c, les couches de substrat étant bien entendu décalées les unes par rapport aux autres de manière à permettre d'obtenir le motif d'antenne souhaité.

Comme représenté à la figure 6, lorsqu'une onde électromagnétique incidente 19 émise par un émetteur tel qu'une borne RFID vient frapper l'une des faces 21 du parallélépipède de substrat métallisé 15, elle peut traverser cette face et pénétrer à l'intérieur du substrat 5, du fait que chaque face du parallélépipède n'est recouverte qu'en partie par des chemins métallisés 11.

Ce faisant, l'onde incidente 19 progresse à l'intérieur du substrat 5 jusqu'à atteindre les chemins métallisés qui se trouvent sur la face 23 opposée à la face de pénétration 25, engendrant ainsi un courant induit 27 à l'intérieur des chemins métallisés se trouvant sur cette face opposée 23, et donc finalement dans l'ensemble de l'antenne recouvrant les six faces du parallélépipède de substrat 15.

Ce courant induit 27 peut alors solliciter la puce électronique noyée dans le substrat 5 et reliée électriquement à l'antenne formée par les chemins métallisés 11.

Ces chemins métallisés 11 étant présents sur chacune des faces du parallélépipède 15 formant l'antenne, on comprend que ce qui vient d'être décrit peut se dérouler de manière analogue quelle que soit l'orientation de ce parallélépipède par rapport à la direction de l'onde incidente 19.

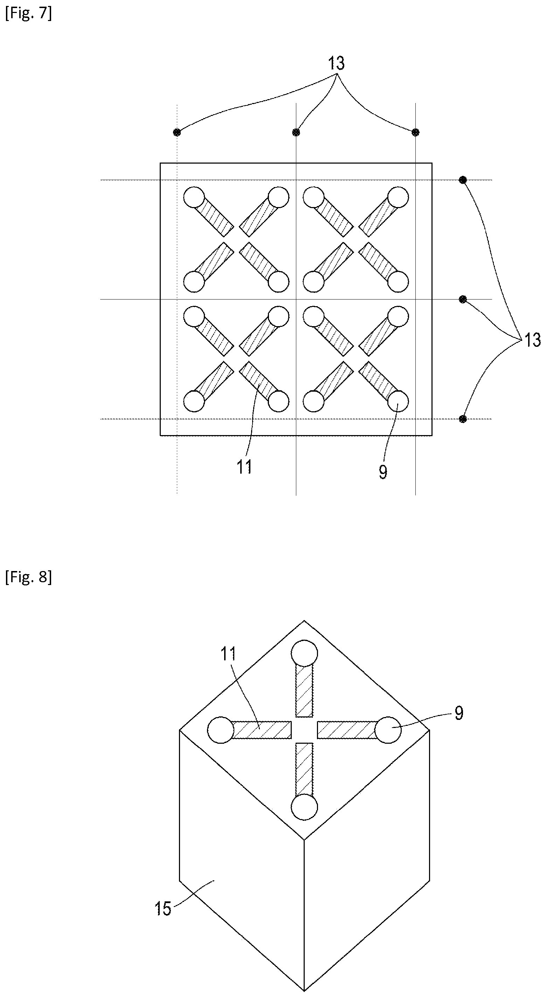

Dans la variante du procédé non comprise dans l'invention illustrée à la figure 7, on répartit les trous 9 et les chemins métallisés 11 formés sur chacune des faces de la plaque de substrat 5 de sorte que les trous 9 forment des paquets de quatre électriquement indépendants les uns des autres.

Autrement dit, il n'existe pas de chemin conducteur sur les faces du substrat 5 qui relie entre eux les trous 9 de chaque paquet de quatre trous.

On peut de la sorte découper la plaque de substrat 5 ainsi métallisée selon des lignes 13 passant entre les trous 3 de chaque paquet de quatre, n'interceptant donc aucun de ces trous 9.

En réalisant une telle découpe, on aboutit à des parallélépipèdes de substrat métallisé 15 non compris dans l'invention tel que celui représenté à la figure 8, sur laquelle on peut voir que les quatre trous 9 sont en retrait par rapport aux arrêtes du parallélépipède, de sorte que seules les deux faces opposées entre lesquelles s'étendent ces trous 9 présentent des chemins métallisés 11 exposés à l'extérieur.

Cette variante du procédé non compris dans l'invention permet ainsi de protéger vis-à-vis des agressions extérieures, et notamment de la corrosion, les chemins conducteurs disposés à l'intérieur des trous 9.

Si l'on souhaite également protéger les chemins conducteurs qui s'étendent entre ces trous, on peut envisager de rapporter des plaques de substrat supplémentaires sur chacune des faces de la plaque de substrat 5 postérieurement à la réalisation des chemins conducteurs 11, et avant la mise en œuvre de l'étape découpe du sandwich de substrat ainsi réalisé.

On peut de la sorte obtenir des tags RFID dans lesquels l'antenne est totalement encapsulée à l'intérieur du substrat, et donc complètement protégée vis-à-vis des agressions extérieures.

Comme on peut le comprendre à la lumière de ce qui précède, un identifiant RFID conforme à l'invention présente une totale isotropie vis-à-vis des ondes incidentes qui frappent l'une quelconque des six faces du parallélépipède.

L'identifiant RFID présente ainsi une efficacité équivalente quelle que soit la direction de l'onde incidente.

Cet identifiant peut de plus être disposé sur l'une quelconque de ses faces en contact avec son support, sans que l'on risque d'être confronté à une problématique de perte de gain, contrairement aux identifiant RFID de la technique antérieure.

De plus, le procédé de fabrication de cet identifiant RFID qui a été exposé ci-dessus permet de réaliser de manière très simple une grande quantité d'identifiants RFID à la fois, sans qu'il soit nécessaire d'intervenir sur chacune des faces de l'identifiant : une intervention de métallisation globale d'une plaque de substrat trouée de manière appropriée suffit, l'étape ultérieure de découpe permettant d'obtenir des parallélépipèdes métallisés sur toutes leurs faces.

L'efficacité de cette méthode tranche par rapport à d'autres méthodes telles que des manipulations par bras robotisé de chaque parallélépipède de substrat, en vue de la métallisation de chacune de ses faces par exemple par sérigraphie, jet d'encre, ou pulvérisation d'aérosol métallisé.

Naturellement, l'invention est décrite dans ce qui précède à titre d'exemple. Il est entendu que l'homme du métier est à même de réaliser différentes variantes de réalisation de l'invention sans pour autant sortir du cadre de l'invention telle que définie par le jeu de revendications.

## Revendications

1. Procédé de fabrication d'un identifiant RFID comprenant les étapes suivantes :
- fourniture d'une plaque substrat (5) formée dans un matériau diélectrique, la plaque substrat (5) présentant deux faces,
- perçage de la plaque substrat (5) d'une pluralité de trous (9) disposés selon au moins un motif prédéfini,
- métallisation des deux faces de la plaque substrat (5), de manière à former une couche métallique respective, ainsi que l'intérieur de chacun des trous (9) de manière à établir pour chaque trou (9) un chemin conducteur entre les deux faces du substrat (5), chaque chemin conducteur passant dans le trou (9) correspondant,
- retrait partiel de la couche métallique respective de chacune des deux faces de la plaque substrat (5) de manière à définir le motif prédéfini sous la forme d'un motif métallisé (11), le motif métallisé (11) reliant les trous (9) entre eux,
- découpe de la plaque substrat (5) selon des lignes (13) de manière à former au moins un parallélépipède (15) formant une antenne comprenant le motif métallisé (11) et les chemins conducteurs, ledit parallélépipède (15) comportant deux faces présentant chacune une partie du motif métallisé (11),
- fourniture d'une puce électronique (3) et reliage de l'antenne à ladite puce électronique (3),
dans lequel lors de l'étape de découpe, une ou plusieurs des lignes (13) interceptent un ou plusieurs trous (9), voire la totalité des trous (9), le parallélépipède comportant en outre quatre côtés reliant les deux faces, le ou chaque trou (9) intercepté par une ligne (13) définissant une portion de cylindre interceptant le ou les côtés correspondants dudit parallélépipède, ladite portion de cylindre ou chacune desdites portions formant un chemin conducteur de l'antenne.

2. Procédé de fabrication d'un identifiant RFID selon la revendication 1, dans lequel lors de l'étape de découpe de la plaque substrat (5), un ou plusieurs trous (9) ne sont pas interceptés par les lignes (13).

3. Procédé de fabrication d'un identifiant RFID selon la revendication 1 à 2, dans lequel, entre l'étape de retrait partiel de la couche métallique respective et l'étape de découpe de la plaque substrat (5), il est prévu une étape d'agencement de plaques de substrat supplémentaires sur chacune des faces de la plaque de substrat (5).

4. Procédé de fabrication d'un identifiant RFID selon la revendication 1 à 2, comprenant, après l'étape de retrait partiel de la couche métallique respective, une étape de superposition de plusieurs plaques de substrat obtenues par les étapes successives de perçage et de métallisation selon la revendication 1, et dans lequel lors de l'étape de découpe de la plaque substrat (5) selon des lignes (13) de manière à former au moins un parallélépipède (15) , le parallélépipède formé résulte de la superposition d'au moins deux plaques substrats.

5. Procédé de fabrication d'un identifiant RFID selon la revendication 2 prise seule ou en combinaison avec la revendication 3 ou 4, dans lequel lors de l'étape de découpe de la plaque substrat (5) selon des lignes (13), pour chaque ligne interceptant des trous (9) au niveau d'une arrête, chacun des trous interceptés par ces lignes au niveau d'une arrête définissant un quart du cylindre formant le chemin conducteur (17) associé à ce trou (9).

6. Procédé de fabrication d'un identifiant RFID selon l'une quelconque des revendications 1 à 5, dans lequel il est fabriqué une pluralité d'identifiants RFID et dans lequel :
- Lors de l'étape de perçage de la plaque substrat (5) d'une pluralité de trous (9), les trous de la pluralité de trous sont disposés selon plusieurs motifs prédéfinis,
- Lors de l'étape de retrait partiel de la couche métallique respective de chacune des deux faces de la plaque substrat (5), ce retrait est réalisé de manière à définir les motifs donnés sous la forme de motifs métallisés (11), chaque motif métallisé (11) reliant entre eux les trous (9) disposés selon ledit motif,
- Lors de l'étape de découpe de la plaque substrat (5) selon des lignes (13), les lignes sont choisies de manière à former plusieurs parallélépipèdes (15) formant chacun une antenne comprenant un motif métallisé (11) respectif et les chemins conducteurs qui y sont associés.

7. Procédé de fabrication d'un identifiant RFID selon la revendication 6, dans lequel lors de l'étape de perçage de la plaque substrat (5), au moins deux motifs prédéfinis définissent au moins un trou (9) commun,
et dans lequel lors de l'étape de découpe de la plaque substrat (5), au moins une ligne intercepte le ou chaque trou (9) commun, de telle manière que les deux parallélépipèdes séparés par la découpe le long de ladite ligne comportent chacun un chemin conducteur formé par une portion de cylindre défini par le ou lesdits trous (9).

8. Identifiant RFID comprenant une plaque substrat (5) diélectrique, une antenne (11, 17) et une puce électronique (3) reliée à cette antenne, dans lequel la plaque substrat (5) comprend une pluralité de de trous (9) métallisés entre deux faces de la plaque substrat (5) et participe à la formation d'un parallélépipède comprenant deux faces, et dans lequel l'antenne (11, 17) comprend :
- un motif métallisé (11) réalisé sur les deux faces du parallélépipède, chacune des deux faces du parallélépipède présentant une partie du motif métallisé (11),
- des chemins conducteurs (17) reliant entre eux les parties du motif métallisé (11) présentés par les faces du parallélépipède, les chemins conducteurs (17) étant formé par les trous (9),,
l'identifiant RFID étant **caractérisé en ce que** le parallélépipède comporte en outre quatre côtés reliant les deux faces du parallélépipède, et dans lequel au moins un chemin conducteur se présente sous la forme d'une portion de cylindre interceptant au moins un côté.

9. Identifiant RFID selon la revendication 8, comprenant une portion respective de plaque substrat supplémentaire agencée sur les deux faces du substrat (5).

10. Identifiant RFID selon la revendication 9 comprenant en outre au moins une deuxième plaque substrat présentant deux faces et quatre arrêtes reliant les deux faces de la deuxième plaque, dans lequel :
- un deuxième motif métallisé est réalisé sur les deux faces de la deuxième plaque substrat, chacune desdites faces de la deuxième plaque substrat présentant une partie respective du deuxième motif métallisé,
- sur chacune des quatre arrêtes de la deuxième plaque substrat, des deuxièmes chemins conducteurs correspondent chacun à une portion de cylindre et relient entre eux les parties de deuxième motif métallisé,
et dans lequel la plaque substrat et la deuxième plaque substrat sont superposés l'une à l'autre pour former le parallélépipède.

## Patentansprüche

1. Verfahren zur Herstellung einer RFID-Kennung, das die folgenden Schritte umfasst:
- Bereitstellen einer Substratplatte (5), die aus einem dielektrischen Material gebildet ist, wobei die Substratplatte (5) zwei Flächen aufweist,
- Bohren einer Vielzahl von Löchern (9) in die Substratplatte (5), die nach mindestens einem vordefinierten Muster angeordnet sind,
- Metallisieren der beiden Flächen der Substratplatte (5), so dass eine jeweilige Metallschicht gebildet wird, sowie des Inneren jedes Lochs (9), so dass für jedes Loch (9) eine Leiterbahn zwischen den beiden Flächen des Substrats (5) hergestellt wird, wobei jede Leiterbahn durch das entsprechende Loch (9) verläuft,
- teilweises Entfernen der jeweiligen Metallschicht von jeder der beiden Flächen der Substratplatte (5), so dass das vordefinierte Muster in Form eines metallisierten Musters (11) definiert wird, wobei das metallisierte Muster (11) die Löcher (9) miteinander verbindet,
- Schneiden der Substratplatte (5) entlang von Linien (13), so dass mindestens ein Quader (15) gebildet wird, der eine Antenne bildet, die das metallisierte Muster (11) und die Leiterbahnen umfasst, wobei der Quader (15) zwei Flächen enthält, die jeweils einen Teil des metallisierten Musters (11) aufweisen,
- Bereitstellen eines elektronischen Chips (3) und Verbinden der Antenne mit dem elektronischen Chip (3),
wobei bei dem Schritt des Schneidens eine oder mehrere der Linien (13) ein oder mehrere Löcher (9) oder sogar alle Löcher (9) schneiden, wobei der Quader ferner vier Seiten enthält, die die beiden Flächen miteinander verbinden, wobei das oder jedes von einer Linie (13) geschnittene Loch (9) einen Zylinderabschnitt definiert, der die entsprechende(n) Seite(n) des Quaders schneidet, wobei der Zylinderabschnitt oder jeder der Abschnitte eine Leiterbahn der Antenne bilden.

2. Verfahren zur Herstellung einer RFID-Kennung nach Anspruch 1, wobei bei dem Schritt des Schneidens der Substratplatte (5) ein oder mehrere Löcher (9) nicht von den Linien (13) geschnitten werden.

3. Verfahren zur Herstellung einer RFID-Kennung nach Anspruch 1 bis 2, wobei zwischen dem Schritt des teilweisen Entfernens der jeweiligen Metallschicht und dem Schritt des Schneidens der Substratplatte (5) ein Schritt des Anordnens zusätzlicher Substratplatten auf jeder der Flächen der Substratplatte (5) vorgesehen ist.

4. Verfahren zur Herstellung einer RFID-Kennung nach Anspruch 1 bis 2, umfassend, nach dem Schritt des teilweisen Entfernens der jeweiligen Metallschicht, einen Schritt des Übereinanderschichtens mehrerer Substratplatten, die durch die aufeinanderfolgenden Schritte des Bohrens und Metallisierens nach Anspruch 1 erhalten werden, und wobei bei dem Schritt des Schneidens der Substratplatte (5) entlang von Linien (13) mindestens ein Quader (15) gebildet wird,wobei sich der gebildete Quader aus dem Übereinanderschichten von mindestens zwei Substratplatten ergibt.

5. Verfahren zur Herstellung einer RFID-Kennung nach Anspruch 2 allein oder in Kombination mit Anspruch 3 oder 4, wobei bei dem Schritt des Schneidens der Substratplatte (5) entlang von Linien (13) für jede Linie, die Löcher (9) an einer Kante schneidet, jedes der von diesen Linien an einer Kante geschnittenen Löcher ein Viertel des Zylinders definiert, der die mit diesem Loch (9) verbundenen Leiterbahn (17) bildet.

6. Verfahren zur Herstellung einer RFID-Kennung nach einem der Ansprüche 1 bis 5, wobei eine Vielzahl von RFID-Kennungen hergestellt werden und wobei:
- bei dem Schritt des Bohrens einer Vielzahl von Löchern (9) in die Substratplatte (5) die Löcher der Vielzahl von Löchern nach mehreren vordefinierten Mustern angeordnet werden,
- bei dem Schritt des teilweisen Entfernens der jeweiligen Metallschicht von jeder der beiden Flächen der Substratplatte (5) dieses Entfernen so durchgeführt wird, dass die in Form von metallisierten Mustern (11) gegebenen Muster definiert werden, wobei jedes metallisierte Muster (11) die gemäß dem Muster angeordneten Löcher (9) miteinander verbindet,
- bei dem Schritt des Schneidens der Substratplatte (5) entlang von Linien (13) werden die Linien so gewählt, dass mehrere Quader (15) gebildet werden, die jeweils eine Antenne bilden, die ein jeweiliges metallisiertes Muster (11) und die damit verbundenen Leiterbahnen umfasst.

7. Verfahren zur Herstellung einer RFID-Kennung nach Anspruch 6, wobei bei dem Schritt des Bohrens der Substratplatte (5) mindestens zwei vordefinierte Muster mindestens ein gemeinsames Loch (9) definieren,
und wobei bei dem Schritt des Schneidens der Substratplatte (5) mindestens eine Linie das oder jedes gemeinsame Loch (9) so schneidet, dass die beiden durch den Schnitt entlang der Linie voneinander getrennten Quader jeweils eine Leiterbahn enthalten, die durch einen von dem oder den Löchern (9) definierten Zylinderabschnitt gebildet wird.

8. RFID-Kennung, die eine dielektrische Substratplatte (5), eine Antenne (11, 17) und einen mit dieser Antenne verbundenen elektronischen Chip (3) umfasst, wobei die Substratplatte (5) eine Vielzahl von metallisierten Löchern (9) zwischen zwei Flächen der Substratplatte (5) umfasst und an der Bildung eines zwei Flächen umfassenden Quaders beteiligt ist, und wobei die Antenne (11, 17) umfasst:
- ein metallisiertes Muster (11), das auf den beiden Flächen des Quaders ausgeführt ist, wobei jede der beiden Flächen des Quaders einen Teil des metallisierten Musters (11) aufweist,
- Leiterbahnen (17), die die Teile des metallisierten Musters (11), die durch die Flächen des Quaders dargestellt sind, miteinander verbinden, wobei die Leiterbahnen (17) durch die Löcher (9) gebildet werden,,
wobei die RFID-Kennung **dadurch gekennzeichnet ist, dass** der Quader ferner vier Seiten enthält, die die beiden Flächen des Quaders miteinander verbinden, und wobei mindestens eine Leiterbahn in Form eines mindestens eine Seite schneidenden Zylinderabschnitts vorliegt.

9. RFID-Kennung nach Anspruch 8, umfassend einen jeweiligen Abschnitt einer zusätzlichen Substratplatte, die auf den beiden Flächen des Substrats (5) angeordnet ist.

10. RFID-Kennung nach Anspruch 9, ferner umfassend mindestens eine zweite Substratplatte mit zwei Flächen und vier Kanten, die die beiden Flächen der zweiten Platte miteinander verbinden, wobei:
- ein zweites metallisiertes Muster auf den beiden Flächen der zweiten Substratplatte ausgeführt ist, wobei jede der Flächen der zweiten Substratplatte einen jeweiligen Teil des zweiten metallisierten Musters aufweist,
- an jeder der vier Kanten der zweiten Substratplatte jeweils zweite Leiterbahnen einem Zylinderabschnitt entsprechen und die Teile des zweiten metallisierten Musters miteinander verbinden,
und wobei die Substratplatte und die zweite Substratplatte übereinander geschichtet sind, um den Quader zu bilden.

## Claims

1. Method for manufacturing an RFID identifier comprising the following steps:
- providing a substrate plate (5) formed from a dielectric material, the substrate plate (5) having two faces,
- piercing into the substrate plate (5) a plurality of holes (9) which are arranged in at least one predefined pattern,
- metallising the two faces of the substrate plate (5), so as to form a respective metallic layer, as well as the interior of each of the holes (9), so as to establish, for each hole (9), a conductive path between the two faces of the substrate (5), each conductive path passing through the corresponding hole (9),
- partially removing the respective metallic layer from each of the two faces of the substrate plate (5), so as to define the predefined pattern in the form of a metallised pattern (11), the metallised pattern (11) connecting the holes (9) to one another,
- cutting the substrate plate (5) along lines (13) so as to form at least one parallelepiped (15) forming an antenna comprising the metallised pattern (11) and the conductive paths, said parallelepiped (15) having two faces, each of which bears a part of the metallised pattern (11),
- providing an electronic chip (3) and linking the antenna to said electronic chip (3),
wherein, during the cutting step, one or more of the lines (13) intersect one or more holes (9), or even all of the holes (9), the parallelepiped further including four sides connecting the two faces, the or each hole (9) intersected by a line (13) defining a cylinder portion intersecting the corresponding side or sides of said parallelepiped, said cylinder portion or each of said portions forming a conductive path of the antenna.

2. Method for manufacturing an RFID identifier according to claim 1, wherein, during the step of cutting the substrate plate (5), one or more holes (9) are not intersected by the lines (13).

3. Method for manufacturing an RFID identifier according to claims 1 to 2, wherein, between the step of partially removing the respective metallic layer and the step of cutting the substrate plate (5), there is a step of arranging additional substrate plates on each of the faces of the substrate plate (5).

4. Method for manufacturing an RFID identifier according to claims 1 to 2, comprising, after the step of partially removing the respective metallic layer, a step of superimposing a plurality of substrate plates obtained by the successive steps of piercing and metallisation according to claim 1, and wherein, during the step of cutting the substrate plate (5) along the lines (13) so as to form at least one parallelepiped (15), the parallelepiped formed results from the superposition of at least two substrate plates.

5. Method for manufacturing an RFID identifier according to claim 2, taken alone or in combination with claim 3 or 4, wherein during the step of cutting the substrate plate (5) along the lines (13), for each line intersecting holes (9) at an edge, each of the holes intersected by these lines at an edge defining a quarter of the cylinder forming the conductive path (17) associated with this hole (9).

6. Method for manufacturing an RFID identifier according to any one of claims 1 to 5, wherein a plurality of RFID identifiers are manufactured and wherein:
- during the step of piercing the substrate plate (5) with a plurality of holes (9), the holes of the plurality of holes are arranged in a plurality of predefined patterns,
- during the step of partially removing the respective metallic layer from each of the two faces of the substrate plate (5), this removal is carried out so as to define the given patterns in the form of metallised patterns (11), each metallised pattern (11) connecting between them the holes (9) arranged in said pattern,
- during the step of cutting the substrate plate (5) along the lines (13), the lines are selected so as to form a plurality of parallelepipeds (15), each forming an antenna comprising a respective metallised pattern (11) and the conductive paths associated therewith.

7. Method for manufacturing an RFID identifier according to claim 6, wherein, during the step of piercing the substrate plate (5), at least two predefined patterns define at least one common hole (9),
and wherein during the step of cutting the substrate plate (5), at least one line intersects the or each common hole (9), such that the two parallelepipeds separated by the cut along said line each include a conductive path formed by a cylinder portion defined by the or said holes (9).

8. RFID identifier comprising a dielectric substrate plate (5), an antenna (11, 17) and an electronic chip (3) connected to said antenna, wherein the substrate plate (5) comprises a plurality of metallised holes (9) between two faces of the substrate plate (5) and contributes to the formation of a parallelepiped comprising two faces, and wherein the antenna (11, 17) comprises:
- a metallised pattern (11) formed on the two faces of the parallelepiped, each of the two faces of the parallelepiped having a part of the metallised pattern (11),
- conductive paths (17) connecting together the parts of the metallised pattern (11) presented by the faces of the parallelepiped, the conductive paths (17) being formed by the holes (9),,
the RFID identifier being **characterised in that** the parallelepiped further comprises four sides connecting the two faces of the parallelepiped, and wherein at least one conductive path is in the form of a cylinder portion intersecting at least one side.

9. RFID identifier according to claim 8, comprising a respective portion of additional substrate plate arranged on both faces of the substrate (5).

10. RFID identifier according to claim 9, further comprising at least one second substrate plate having two faces and four edges connecting the two faces of the second plate, wherein:
- a second metallised pattern is formed on the two faces of the second substrate plate, each of said faces of the second substrate plate bearing a respective part of the second metallised pattern,
- on each of the four edges of the second substrate plate, second conductive paths each correspond to a cylinder portion, and connect between them the parts of the second metallised pattern,
and wherein the substrate plate and the second substrate plate are superimposed on top of one another to form the parallelepiped.
